Europäisches Patentamt

European Patent Office

Office européen des brevets

(11) Publication number: **0 392 963**
**A2**

## EUROPEAN PATENT APPLICATION

(21) Application number: **90630077.7**

(51) Int. Cl.5: **H02M 3/335**

(22) Date of filing: **05.04.90**

(30) Priority: **12.04.89 US 336801**

(43) Date of publication of application:
**17.10.90 Bulletin 90/42**

(84) Designated Contracting States:
**BE DE DK ES FR GB IT NL SE**

(71) Applicant: **EMERSON ELECTRIC CO.**
**8100 W. Florissant Avenue**
**St. Louis Missouri 63136(US)**

(72) Inventor: **Venturini, Marco**
**Via S. Scorza 15121**
**I-16136 Genova(IT)**

(74) Representative: **Waxweiler, Jean et al**
**OFFICE DENNEMEYER S.à.r.l. P.O. Box 1502**
**L-1015 Luxembourg(LU)**

(54) **Preprocessor auxiliary power supply.**

(57) A preprocessor circuit for a front end based power converter utilizes a choke winding, a freewheeling diode connected across the choke winding, and a semiconductor power switch. An auxiliary power supply for generating low voltage power for semiconductor switches and the like includes a secondary winding coupled to the choke winding. The secondary winding has a predetermined turns ratio with respect to the choke winding. The voltage induced into the second winding is rectified and summed to produce an output voltage which is equal to the input voltage to the preprocessor circuit divided by the turns ratio between the choke winding and the secondary winding.

FIG.I.

## Background of the Invention

This invention relates to power converters and, more particularly, to an auxiliary power supply for such converters.

In the design of power inverters and variable speed motor drives, a common design problem is providing a simple and inexpensive low voltage auxiliary power supply. Relatively low voltages are needed for control circuitry of the motor drive as well as for control of high voltage AC switches. One typical solution to this problem involves use of small line frequency transformers, occasionally with multiple secondary windings. As a rule, this solution is expensive. It adds a high mass and large volume component to a generally crowded printed circuit board. And it usually requires bulky electrolytic capacitors for each independent winding in order to filter the line frequency ripple.

Alternatively, a small switch mode power supply circuit is sometimes used to supply the low voltage power. These switch mode power supply circuits operate at high frequencies and have their own high frequency transformer. This alternative solution, however, is complex and usually much too expensive for use with small converters such as those designed for consumer appliances.

## Summary of the Invention

Among the several objects and features of the present invention may be noted an auxiliary power supply for front end based power converters, particularly suited for use in consumer appliances.

Another object is the provision of an auxiliary power supply which takes up a minimal amount of space.

A third object is the provision of such an auxiliary power supply which uses a minimal number of components.

A fourth object is the provision of such an auxiliary power supply which is readily incorporated with existing front end based power converter circuitry. A fifth object is the provision of such an auxiliary power supply which is low in cost, effective and reliable.

Other objects and features will be in part apparent and in part pointed out hereinafter.

Briefly, in a first aspect of the present invention a power converter includes an inverter for supplying power to a load. The inverter has semiconductor control devices for controlling characteristics of the power supplied by the inverter to the load. The power converter has a preprocessor for converting power from a power source to substantially direct current power at a desired voltage, the preprocessor supplying direct current power to the inverter. The preprocessor includes a semiconductor switching device and a choke having a choke winding. The switching device is connected in series in one input line of the preprocessor so as to selectively chop the power applied to the choke winding. An auxiliary power supply provides relatively low voltage power to control devices of the converter. The auxiliary power supply includes a secondary winding magnetically coupled with the choke winding, the number of turns of the choke winding to the number of turns in the secondary winding being a predetermined ratio. The auxiliary power supply also includes two opposed half-wave rectifiers connected across the secondary winding and a circuit for summing the voltages from the rectifiers to provide a power supply output which is independent of the duty cycle of the switching device in the preprocessor.

In a second aspect of the present invention, a preprocessor circuit includes a choke having a choke winding, a free-wheeling diode connecting the winding to the load and a semiconductor power switching device connected in series in an input line by means of which electrical power is applied to the choke winding. An auxiliary power supply generates low voltage power for control circuitry, high voltage semiconductor switches and the like. The power supply includes a secondary winding coupled to the choke winding which has a predetermined turns ratio with respect to the choke winding. A rectifier circuit rectifies the voltage induced in the secondary winding by current flowing through the choke winding. The rectifier circuit includes a pair of half-wave rectifiers connected across the secondary winding to provide full-wave rectification of the induced voltages. A summing circuit sums the rectified voltages from the rectifier circuit.

In a third aspect of the present invention, the preprocessor has an input voltage and an output voltage and includes a choke with a primary winding having a predetermined number of turns. A free-wheeling diode is connected between the primary winding and the opposite input and a semiconductor power switching device is series connected with the primary winding. A power supply generates low voltage power for control circuits, high voltage semiconductor switches and the like. The power supply includes a secondary winding magnetically coupled to the primary winding and having a predetermined turns ratio with respect to the primary winding. First and second half-wave rectifiers are connected across the secondary winding to provide full-wave rectification of the voltage induced in the secondary winding. A summing circuit includes a pair of capacitors. One capacitor of the pair is connected in one rectifier circuit and the other capacitor of the pair is connected in the other rectifier circuit. The capacitors have a common connection point between them which constitutes a summing point at which the half-wave rectifier voltages are summed to produce a full-wave rectified power supply voltage equal to the preprocessor input voltage divided by the turns ratio between the primary winding and the secondary winding.

Brief Description of the Drawings

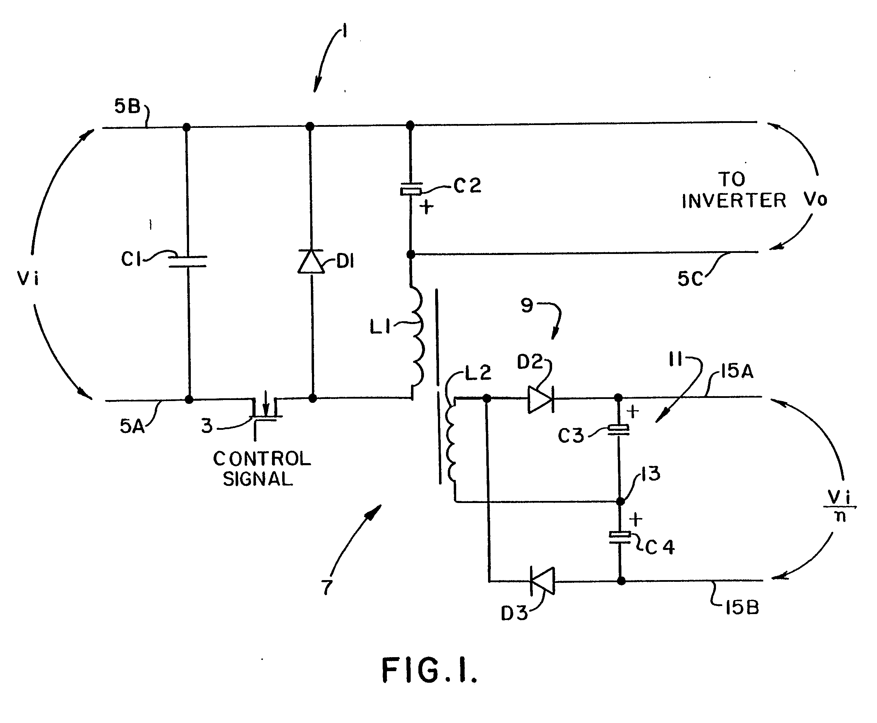

The sole Figure of the drawings is an electrical schematic of the converter with auxiliary power supply of the present invention.

Description of the Preferred Embodiment

Referring now to the Figure, a preprocessor or front end circuit 1 for a power converter supplies direct current (dc) power to a power inverter (not shown). Both the preprocessor and the inverter are of conventional construction. Power to the preprocessor is supplied from a rectifier (not shown) over two lines 5A and 5B.

The preprocessor circuit comprises a choke having a choke winding L1 which operates at high frequency. A free wheeling diode D1 is connected in parallel across the choke winding. A semiconductor switching device or power switch 3 is series connected in line 5A to control the voltage applied across winding L1. A filter capacitor C1 is connected across input lines 5A and 5B.

The output of the preprocessor circuit is applied to an input of the inverter (not shown) across lines 5B and 5C. Choke winding L1 is connected across lines 5A and 5C and an output capacitor C2 is connected across output lines 5B and 5C. When a voltage Vi is impressed across input lines 5A and 5B, an output voltage Vo is supplied to the inverter across lines 5B and 5C. The magnitude of voltage Vo depends upon the requirements of the load, but it is relatively high compared to common logic circuit voltage levels.

An auxiliary power supply means 7 of the present invention generates low voltage power which is supplied to control circuitry (not shown) or high voltage semiconductor switches such as switch 3. The inverter typically includes such control circuitry and switches which require low voltage power for operation. Auxiliary power supply means 7 comprises a winding L2 which is magnetically coupled to winding L1, the secondary winding L2 having a predetermined turns ratio with respect to winding L1. With a typical choke winding, the necessary low voltage is achieved with only one to three turns on the secondary winding. Such a low number of turns allows the use of multiple secondaries if needed for a plurality of auxiliary power supplies. Large amounts of auxiliary power can be obtained in this manner since the main preprocessor choke winding L1 is sized for the full converter power.

Auxiliary power supply means 7 includes rectifying means 9 for rectifying the electrical voltage induced in winding L2. Rectifying means 9 consists of a pair of opposed, semiconductor diodes D2 and D3 which function as half wave rectifiers. These diodes are connected across winding L2 so as to provide full wave rectification of the induced voltage.

Finally, auxiliary power supply means 7 comprises summing means 11 for summing the resultant rectified voltages from the diodes. Summing means 11 comprises low capacitance capacitors C3 and C4 which are respectively connected in the rectifier circuits with diodes D2 and D3. Capacitors C3 and C4 have small capacitance values due to the high frequency of operation of the circuit.

Capacitors C3 and C4 are commonly connected at a junction point 13 which comprises a summing point. During operation of the preprocessor, the voltage across the power choke winding L1 switches rapidly between the values Vo and Vi-Vo, during diode and transistor conduction respectively. The voltages across the secondary winding L2 thus are Vo/n and (Vi-Vo)/n, where "n" is the turns ratio. The summing means effectively sums these two voltages to give the secondary voltage $Vs = Vo/n + (Vi - Vo)/n = Vo/n - Vo/n + Vi/n = Vi/n$.

Thus, secondary winding voltages are summed to produce a voltage equal to the preprocessor input voltage divided by the turns ratio between winding L1 and winding L2. This means that the auxiliary voltage generated by the auxiliary power supply does not depend upon the duty cycle of the front end or preprocessor circuit.

In view of the above it will be seen that the various objects and features of the present invention are achieved and other advantageous results obtained.

As various changes could be made in the above systems without departing from the scope of the invention, it is intended that all matter contained in the above description or shown in the accompanying drawing shall be interpreted as illustrative and not in a limiting sense.

**Claims**

1 In a power converter including an inverter for supplying power to a load, said inverter having semiconductor control devices for controlling characteristics of the power supplied by the inverter, said power converter comprising:
preprocessor means for converting power from a power source to substantially direct current power at a desired voltage, said preprocessor means supplying direct current power to the inverter;
said preprocessor means including a semiconductor switching device and a choke having a choke winding, said switching device being connected in series in one input line of the preprocessor means so as to selectively chop the power applied to the choke winding; and
auxiliary power supply means for providing relatively low voltage power to control devices of the converter, said power supply means including a secondary winding magnetically coupled with the choke winding, the number of turns of the choke winding to the number of turns in the secondary winding being a predetermined ratio;
said auxiliary power supply means also including two opposed half-wave rectifiers connected across the secondary winding and means for summing the voltages from said rectifiers to provide a power supply output which is independent of the chopping frequency of the switching device in the preprocessor means.

2. The power converter as set forth in claim 1 wherein the summing means includes a pair of capacitors connected in series across the output of the auxiliary power supply means, one side of the secondary winding being connected to the junction between said capacitors.

3. The power converter as set forth in claim 2 wherein both half-wave rectifiers are directly connected to the other side of the secondary winding.

4. The power converter as set forth in claim 3 wherein one of the half-wave rectifiers is connected in series with one of the capacitors and the secondary winding, the other of the half-wave rectifiers being connected in series with the other of the capacitors and the secondary winding.

5. In a preprocessor circuit for a front-end based power converter, the preprocessor circuit including a choke having a choke winding, a free-wheeling diode connected between the winding and the opposite input line, and a semiconductor power switching device connected in series in an input line by which electrical power is applied to the choke winding, the improvement comprising power supply means for generating low voltage power for control circuitry, high voltage semiconductor switches and the like, said power supply means comprising:
a secondary winding coupled to the choke winding, said secondary winding having a predetermined turns ratio with respect to the choke winding;
rectifier means for rectifying the electrical voltage induced in the secondary winding by current flowing through the choke winding, said rectifier means comprising a pair of half-wave rectifiers connected across the secondary winding to provide full-wave rectification of the induced voltages; and
summing means for summing the rectified voltages from the rectifier means.

6. The improvement of claim 5 wherein each half-wave rectifier comprises a semiconductor diode.

7. The improvement of claim 5 wherein the summing means includes a capacitor connected in each rectifier circuit, the capacitors having a common connection between them comprising a summing point at which the rectifier voltages of the half-wave rectifiers are summed to produce a voltage equal to the preprocessor input voltage divided by the turns ratio between the choke winding and the secondary winding.

8. The improvement of claim 7 wherein the secondary winding has from one to three turns.

9. The improvement of claim 7 wherein the capacitors each have a relatively low capacitance value.

10. In a preprocessor circuit for a front-end based power converter, the preprocessor having an input voltage and an output voltage and include a choke comprising a primary winding having a predetermined number of turns, a free-wheeling diode connected in between the winding and the load, and a semiconductor power switching device series connected with the primary winding, the improvement comprising power supply means for generating low voltage power for control circuits, high voltage semiconductor switches and the like, the power supply means including:
a secondary winding magnetically coupled to the primary winding and having a predetermined turns ratio with respect to the primary winding;
first and second half-wave rectifiers connected across said secondary winding to provide full-wave rectification of the voltage induced in the secondary winding; and,
summing means comprising a pair of capacitors, one capacitor of the pair being connected in one rectifier circuit and the other capacitor of the pair being connected in the other rectifier circuit, the capacitors having a common connection point between them comprising a summing point at which the half-wave rectifier voltages are summed to produce a full-wave rectified power supply voltage equal to the preprocessor input voltage divided by the turns ratio between the primary winding and the secondary winding.

11. The improvement of claim 10 wherein the secondary winding has between one and three turns.

12. The improvement of claim 10 wherein the capacitors each have low capacitance values.

FIG.I.